# EUROPEAN PATENT SPECIFICATION

(11) **EP 2 256 518 B1**
(45) Date of publication and mention of the grant of the patent: **24.12.2014**
(21) Application number: 09382080.1
(22) Date of filing: 26.05.2009
(51) Int. Cl.: G01T 1/11, G01T 1/115, G01T 1/02

(54) **Process and equipment for the measurement of ionizing radiation doses in patients**
Verfahren und Geräte zur Messung der ionisierenden Strahlungsdosen bei Patienten
Procédé et équipement pour la mesure des doses de rayonnement d'ionisation chez des patients

(43) Date of publication of application: 01.12.2010
(73) Proprietor: Dosibiologica S.L., 28806 Alcala de Henares (ES)
(72) Inventor: Corpas Rivera, LUIS, 28004, MADRID (ES); Garcia, Diego Alberto Angel, 46011, VALENCIA (ES)
(74) Representative: Manzano Cantos, Gregorio

(56) References cited:
- FR-A1- 2 331 127
- JP-A- 2009 042 247
- US-A- 3 657 535
- US-A- 4 056 729
- US-A- 4 827 132
- US-A- 5 063 298
- US-A1- 2004 236 207
- US-A1- 2008 149 835
- STAUB D ET AL: "Real-time radio-transparent dosimeter for X-ray imaging system", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 525, no. 1-2, 1 June 2004 (2004-06-01), pages 303-307, XP004526089, ISSN: 0168-9002, DOI: DOI:10.1016/J.NIMA.2004.03.078

## Description

### Object of the Invention

According to its title, the invention relates to a process and equipment for the measurement of surface ionizing radiation doses in patients, and also for the estimation of ionizing radiation doses in organs of patients.

### Background

It is known that ionizing radiations represent a health risk. This risk increases with the dose of said radiations received by the body. Likewise, the risk varies according to the body organ or tissue in question.

Despite these risks, ionizing radiations are usual in medical procedures. They are used to conduct necessary examinations in diagnosis (radiodiagnosis) and also as therapy, mainly in tumor and oncological processes (radiotherapy).

The reason for using ionizing radiations, despite the fact that it is known that they entail a health risk, is in the balance between the risk and the benefit. Despite the fact that the patient assumes a health risk, he or she will obtain a benefit, consisting of his or her correct diagnosis in the case of radiodiagnosis, or his or her curing in the case of radiotherapy.

Given that the field of ionizing radiations emitted by medical equipment covers an area exceeding the body of the patient to be treated, these radiations end up also affecting those people located in the vicinity. This reality, added to the fact that the ionizing radiation doses are accumulative, makes it possible for the professionally exposed personnel to receive significant doses. If it is also taken into account that this professionally exposed personnel, generally healthcare personnel, does not receive the health benefit that the patient does receive, it is concluded that it is important to take measures to reduce the doses received by professionally exposed people to a minimum.

Ionizing radiations cannot be perceived by the senses of human beings. Therefore, an essential step in the process for reducing ionizing radiations in professionally exposed personnel is the measurement of the doses received.

Processes and equipment for the measurement of the doses received by professionally exposed people have existed and been used for a long time, in the medical field and in the industrial and military field.

US 4,056,729 discloses a dosimeter device comprising a frame, into which thermoluminescent dosimetry disks are shap-fit. Furthermore, the following background documents relate to the purpose of the invention:

US 4,835,388,

US 5,177,363,

US 5,572,027,

US 250361,

US 2004/236207 A1.

The problem for the measurement of doses in the professionally exposed people is therefore already solved, however, the problem of the measurement of ionizing radiation doses in patients has still to be solved.

The measurement of the dose received by patients is important, mainly due to the following reasons:
▪ It allows detecting if a piece of equipment emits less radiation than that expected. It is thus possible to make decisions for that purpose. For example, radiotherapy equipment emitting less radiations than those expected could be ineffective for treating the patient, however, this would not be detected until a periodic quality control was performed on the equipment. It would then be too late for all the patients who were treated since the failure occurred.
▪ It allows detecting if a piece of equipment emits more radiations than those expected. It is thus possible to act promptly, preventing the faulty equipment from affecting a larger number of patients.
▪ It allows detecting sporadic faults in the strength, duration or nature of the radioactive field emitted by radiodiagnosis or radiotherapy equipment. These faults can have a human origin, or of the equipment, and could go unnoticed in a routine check of the equipment, without the presence of the patient.
▪ It allows adjusting the radiodiagnosis equipment, such that the dose absorbed by the patient is reduced, maintaining the necessary image quality.
▪ It provides legal safety for the people responsible for the healthcare center, in the sense that they can prove the dose received by the patients, in the event that they are sued by the patient, due to the onset of any disease in such patient, which is intended to be attributed to an excessive dose.

Some of the systems designed for professionally exposed people have been sporadically applied to the measurement of doses in patients, but their features do not allow their practical and systematic application for some of the following reasons:
▪ Dosimeters are not radiotransparent. Therefore they appear in radiodiagnosis images (X-rays). This is unacceptable, because they can conceal the area of the image which is necessary for reaching a correct diagnosis.
▪ Dosimeters are not radiotransparent. Therefore, they alter the radiation field in radiotherapy. This in unacceptable, because they alter the strength and geometry of the radiation field calculated by the radiophysicist, and prescribed by the physician, for the correct treatment of the patient.
▪ The large size of dosimeters makes them unviable for their placement in some medical procedures, especially in dental procedures.
▪ The dosimeter identification system does allow a safe association between the dosimeter and the patient. This logical association is required to be automatic and independent of the human operator, to assure the absence of errors.
▪ The computer application executed in the site in which the patient is treated is not prepared for patients. In fact, this application is designed for professionally exposed personnel. This personnel measures the dose accumulated during a long time period (generally one month), however, a system aimed at patients must measure the dose corresponding to each treatment, which usually has a duration of minutes.
▪ The handling of the system generally requires high training, which is outside the area of the training of healthcare professionals, who work with the patients.
▪ The process is unsuitable for patients. It does not indicate the area of the body in which the dosimeter is to be located, it does not allow an automatic and simple identification of the dosimeter minutes before using it in the patient, etc.

### Specification

The simple design of an apparatus is not enough to achieve the final objective of knowing the ionizing radiation doses absorbed by the patient, both surface doses and doses in organs. It must be taken into account that the patient is treated in premises, provided with certain means and personnel, who can perform several operations, but other necessary operations and resources are out of their reach. The latter are mainly the administration of the database of the patients, and the reading and interpretation of the data obtained during the test.

Therefore, a system formed by several pieces of equipment, interconnected to one another, must be developed.

Since it must also be taken into account that the information must be obtained in an extremely reliable manner, it is essential to establish a process for the entire process for calibrating the dosimeters, calibrating the equipment to be used, obtaining relevant information during the procedure, and processing such information.

### The equipment

The equipment consists of multiple dosimeters, an autonomous dosimeter identifier, a dosimeter reader, and a computer application.

Each dosimeter is formed by an ionizing radiation sensor element, and a frame. The function of the frame is to provide the assembly of the dosimeter with a size suitable for handling it, and provide it with a unique identity.

The dosimeters used are radiotransparent, so that the image quality is not reduced in the event of using them in radiodiagnosis, or the strength or shape of the ionizing radiation field is not altered in the event of using them in radiotherapy.

These dosimeters must have a thickness less than or equal to 1 mm, a width between 5 and 15 mm and a height between 15 and 25 mm. The reason for these dimensions is that if it is smaller, it is difficult for the professionals who are responsible for it to handle it, but if it is larger, it is unsuitable for its use in certain parts of the body, especially in the mouth. If it is too large, it also makes impossible to use several dosimeters, close to one another.

The dosimeter must have an asymmetry such that it allows checking, without doubts, that it is being used with the correct orientation. This asymmetry must be detectable both for the machines and for the human operator, without needing to use more means than his or her own senses.

Each dosimeter is individually encoded, such that it has a unique identity. It is essential for this identity to be read in a completely reliable manner. The corresponding code must therefore be redundant, and allow the detection of errors. The code is designed to be read by a machine, however, and for exceptional cases, it must be possible for a human operator to interpret the code without the use of means other than his or her own senses and the suitable training.

The autonomous identifier is an apparatus which is capable of reading the identity of a dosimeter, checking the existence of errors, and communicating these results to a computer, in which the application of the system is being executed.

The dosimeter reader is automatic, simple-to-use equipment, with the following capabilities.
▪ It automatically takes dosimeters from those which have been placed in an entrance deposit.
▪ It reads the identity code of each dosimeter, and verifies the existence of errors.
▪ It is capable of irradiating the dosimeter at a known dose, for the purpose of calibrating it or checking the equipment.
▪ It can read the dosimetric information contained in the dosimeter.
▪ It can "erase" or clean the dosimetric information of the dosimeter.
▪ It is capable of classifying the dosimeters in several compartments, according to criteria such as the read dose, if it is any type of special dosimeter, according to the nature of the error produced with the dosimeter, or others.
▪ It is capable of self-checking its functions. It is especially capable of checking its sensors of the dosimetric information contained in the dosimeter by means of the internal generation of a known signal, equivalent to that of the dosimeter.

The computer application has three modules which can be executed in a single computer, or in three independent ones. The information can flow between the three modules by means of a computer network, or portable digital media.

The first module of the computer application resides in a computer located next to the site in which the patient is treated. It is to this computer to which an autonomous identifier is connected. It is in charge of consulting the database to obtain and display the information related to the patient. It requests additional information from the operator, if necessary, and communicates with the autonomous identifier to know the identity of the dosimeters.

The second module resides in a computer located next to the dosimeter reader, and connected thereto. It is in charge of the control of the dosimeter reader. It executes the processes for reading dosimeters, irradiating dosimeters, calibrating dosimeters, calibrating the reader, controlling quality, and utilities for the technical service.

The third module, which does not have a specific location, does not need to be connected to any equipment, except the communications network. It is in charge of the evaluation of the doses received by the patient, according to the information that it receives from the two previous modules.

### The process

Before starting the medical procedure, the healthcare personnel, using the first module of the computer application, open or creates the record of the patient, which shows his or her identifying data, and the procedure to be performed.

According to the procedure, the system can request additional data, such as biometric data, age, sex or others.

After entering the data, the system indicates to the place or places of the body of the patient in which the ionizing radiation sensors, hereinafter dosimeters must be placed.

At this time, using the autonomous identifier, the operator presents to the system each of the dosimeters which he or she proposes to use. The system records the identity of said dosimeters, and associates it with the patient, the location in his or her body, and the procedure, such that it can be differentiated in a unique manner.

Once the dosimeters are placed in the patient, the procedure is performed.

When the procedure ends, or during it, the information obtained by the dosimeter or dosimeters is red by means of the dosimeter reader, controlled by the second module of the computer application.

With all the information collected, i.e., the nature of the procedure, the biometric data, the age, the sex, the information obtained from the dosimeters, and others which may have been requested, using the third module of the computer application, the system executes an algorithm, the result of which is the information about the surface (or entrance) dose and the estimation of the dose in organs.

The system is constructed such that it is accessed by means of a control of users who belong in turn to one or several profiles. According to the profile, each user has certain operations and the access to various data restricted.

The usefulness of these restrictions is based on the protection of the data related to the health of the patients, and the protection of the system, such that each user can only operate those areas for which he or she is qualified.

The system saves the information of each dosimeter, including its individualized calibration. To enable this calibration, the process provides a special operating mode for the calibration operation.

The pieces of equipment forming the system are capable of self-checking for the purpose of minimizing the risk of loss of information, or lack of the appropriate precision therein.

For greater assurance, the lector periodically demands a programmable amount of control dosimeters and zero dosimeters. The control dosimeters have been irradiated at a known dose, and are used to check that the reading thereof is comprised inside a programmable range, centered on said known dose. Zero dosimeters have no dose, and are used to check the background noise, or dose assigned by the reader when it should be zero. The system checks that the dose read in these zero dosimeters does not exceed a programmable amount.

In the drawings:
Figure 1 is a perspective front foreshortened and side view of the dosimeter.
Figure 2 is a perspective front foreshortened and plan view of the irradiating member.
Figure 3 is a perspective exploded side and plan view of the dosimeter collection unit.

### Preferred Embodiment

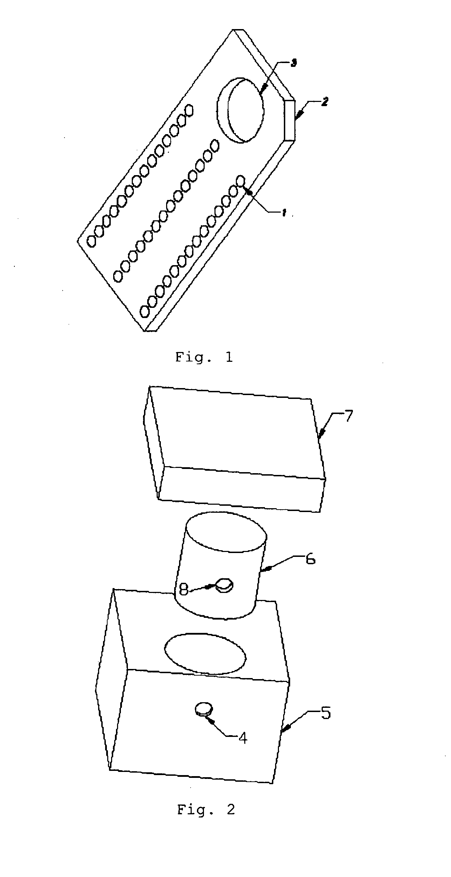

The frame of the dosimeter (Figure 1) is a 21x9x1 mm parallelepiped (A), in which a 2x2 mm bevel edge (2) has been made in one of its corners.

The sensor element is a doped lithium fluoride (TLD) disk (not shown), the thermoluminescent properties of which make it suitable for this application.

The sensing disk is snap-fit in a borehole (3) of the frame (A) of the dosimeter.

The frame (A) of the dosimeter is made of polyimide, the trade name of which is "Kapton".

Both the sensor disk and the frame (A), constructed by means of these materials, are radiotransparent for energies greater than 40 KVp.

The frame (A) has a series of boreholes (1) made therein, which boreholes are the unique identity or code of the dosimeter. The possible positions of the holes are located in an array of three columns and 14 rows. However, only 24 boreholes are made in said positions. To assure the reliability of the reading of the code or identity, and to be able to check that there are no errors, the location of the boreholes inside the mentioned array must comply with the following rules:
▪ There must be exactly 8 boreholes in each of the three columns. Thus, if any of the boreholes is not detected, it would be easy to determine there has been an error.
▪ There must be at least one borehole in each row. Thus, the automatic identification system, either the autonomous identifier or the dosimeter reader, can count the rows and determine that there has been an error if the number thereof is not 14.

The arrangement of the boreholes in three columns allows making the automatic identity detector (in the autonomous identifier or in the dosimeter reader), by means of only three optical sensors for the 24 boreholes. Each of these sensors is located facing one of the three columns, and the dosimeter is moved in front of them, in the direction of the columns, so that all the rows pass in front of them.

The rule of the existence of at least one hole per row enables the dosimeter to be moved by gravity, which considerably simplifies the system. This assertion is based on the fact that, although the movement is not at a constant speed, the automatic identification system still has enough information since it knows that when it no longer detects holes, the following hole that it detects will belong to the next row, independently of the time elapsed between them.

The 2x2 mm bevel edge (2) provides the asymmetry necessary to be able to determine the orientation of the dosimeter. It has the advantage that it can be detected automatically by the same optical sensor intended to detect the encoding holes (1) of the dosimeter, thus simplifying the system.

Both the bevel edge (2) and the boreholes (1) can be identified by a human operator, if necessary, with the simple use of his or her senses.

The autonomous identifier is equipment which is connected by means of the USB port to a computer executing the first module of the software application.

The autonomous identifier has three optical sensors to measure the existence or non-existence of encoding holes (1) in each of the positions of the array (A) of the dosimeter. It uses these same sensors to detect the position of the bevel edge (2) of the dosimeter.

The dosimeters move inside the autonomous identifier by the action of gravity, along a channel traversing it.

Using the information of the bevel edge (2) of the dosimeter, the autonomous identifier can identify the dosimeters whichever the orientation with which they pass through its inside.

The dosimeter reader is mainly made up of: the loading unit, the transport channel, the identification unit, the irradiation unit, the heating unit, the light measurement unit, and the dosimeter collection unit.

The loading unit extracts the dosimeters from a removable cartridge and delivers them to the transport channel.

The fact that the cartridge is removable has the advantage that in one site there may be more cartridges than machines. Thus, the operator can fill manually or by means of an especially designed machine (cartridge filler), whole the machine is working automatically using the cartridge installed therein.

The dosimeters are removed from the cartridge by means of using a stepping motor, with a hollow and threaded shaft, which forces a linear movement in a spindle having restricted rotation. This technique has the advantage, compared to others such as electromagnets, solenoids or connecting rod_crank_slide, that it is much less aggressive and easier to calibrate with precision.

The transport channel is in charge of moving the dosimeter through the various stations, in which the operation must be performed with it.

It consists of a channel, or tube with a rectangular section, through which the dosimeter moves according to its larger dimension, as a result of the force of gravity. Along the channel there are gates blocking its passage, to force it to remain in a certain station, while the gate remains closed. Additionally, in each gate there is an infrared light barrier to detect the presence of the dosimeter. The use of infrared light has the advantage, compared to other wavelengths, that the gain of the photomultiplier tube is virtually nil in said wavelength, therefore it cannot introduce noise in the light signal of the dosimeter.

The identification unit, has an operation and design similar to that already described for the autonomous identifier, with the exception that the dosimeter reader is incorporated. It acts when the dosimeter passes between the stations corresponding to the loading station and the irradiation station.

The irradiation unit (Fig. 2), is capable of irradiating the dosimeter, stopped in the corresponding transport channel station, at a known dose. It consists of a solid stainless steel block (5), inside which a hollow (5.0) has been made so that a cylinder (6), also made of stainless steel, rotates very tightly. The block has a small orifice (4) facing the irradiation station, whereas the cylinder (6) has embedded therein a radioactive source in the cavity (8). The rotation of the cylinder (6) can have the source facing the hole (4), whereby the dosimeter is irradiated, without radiations coming out, or maintain the source inside the block, whereby its radiation is completely attenuated by the steel mass.

The design of the irradiator with the source located in the outer periphery of a solid cylinder rotating inside a solid block has the advantage, compared to typical systems, in which a slide makes the mobile part of the shield, in which, by means of the system of the cylinder, it is possible to place the source very close to the element to be irradiated, whereas, given that the slide must have a large thickness to fulfill its shielding function, the source is always further away from the object to be irradiated. The fact of being able to bring the source much closer is very important, because to achieve the same ionizing radiation intensity, a smaller source can be used, which will have much less leakage radiation, will allow designing an irradiator with less shielding, lighter and less expensive, and will simplify the administrative requirements for acquiring and using said source, with lower activity.

The heating unit, is in charge of heating the sensor element of the dosimeter by means of a temperature curve with programmable parameters, with always rises linearly. It is important for the temperature curve to rise linearly for the correct interpretation of the light curve emitted by the dosimeter. The heating occurs by means of a nitrogen stream, which has been passed through a stainless steel tube with a reduced section. The tube is assembled by short-circuiting the low-voltage winding of a transformer. The winding of the high phase of said transformer is connected to the main voltage, through a triac, to control the power. The temperature of the stream is measured by means of a thermocouple, the information of which passes to a microcontroller, which decides the power to be delivered for the purpose of producing the programmed curve. The microcontroller fulfills the function of a PID regulator, but the calculations were previously performed with extreme precision in a PC, and stored in tables, which are used by the microcontroller. This process allows using a microcontroller which is not very powerful and not very quick, to perform the calculations in real time, which a much more powerful one could not perform. Furthermore, modeling the non-linear response of the thermocouple is prevented, since the original calculations were performed with the real curve. The latter also affects the precision.

Additionally, the heating unit records both the real temperature curve achieved and the power curve needed to achieve it. These curves, and specifically the power curve, are of special interest for the early detection of failures in the heating unit. The second module of the software application verifies that both the difference between the real curve and the programmed curve and the power used are within established limits. Each part of a curve requires a certain power, and if such power is higher or lower, it activates an alarm allowing the early detection of a failure.

The light measurement unit is in charge of measuring the light emitted by the sensor while it is heated. This light is directly related to the ionizing radiation received by the sensor. It mainly consists of a photomultiplier tube emitting a pulse current for each photon of light emitted by the sensor. A mathematical algorithm based on statistics laws corrects the number of photons counted by means of the probability of a photon being emitted, whereas the pulse generated by the previous one is being produced.

The light curve obtained is analyzed automatically for the purpose of determining the characteristic points indicating the area of the interest for determining the dose. This analysis also determines the background noise, for the purpose of subtracting it.

A light-emitting diode, or LED, can be activated without the presence of the dosimeter to check the operation of the photomultiplier tube and the photon-counting electronics.

An internal frequency generator can substitute the signal coming from the photomultiplier tube for the purpose of checking the operation of the electronics processing said signal.

The dosimeter collection unit is in charge of collecting and classifying the dosimeters coming out of the lower end of the channel.

The classification function is essential, since it considerably simplifies the work of the operator of the reader. The dosimeters irradiated at a known dose, those of zero dose, those which have been read normally, those which have given any type of identification error, those which have given an abnormally high dose, those which have given an abnormally low dose and others are separated. This selection performed by the machine prevents the operator from having to perform it manually.

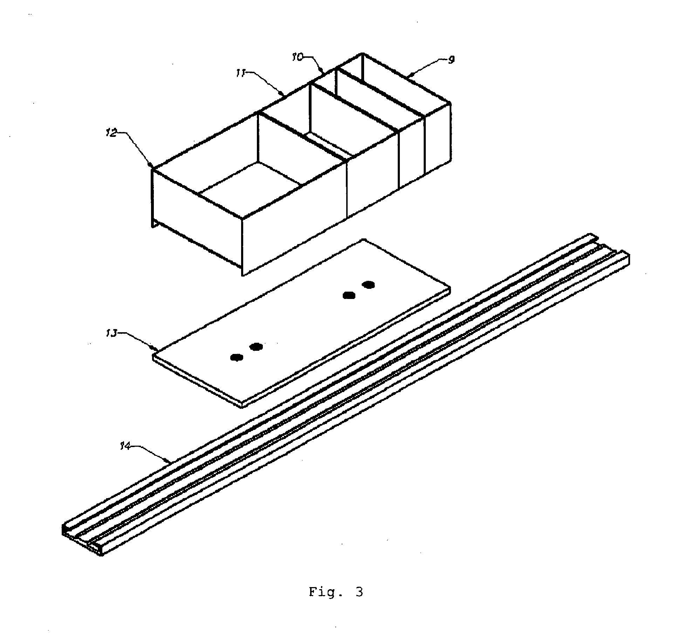

The dosimeter collection unit (Fig. 3), consists of a platform (13) which is capable of sliding on a horizontal linear guide (14). One or several containers (9 to 12) are assembled on the platform. The containers are parallelepiped vessels, all of them with the same height and width, but different depths, which gives them different volumes and allows multiple combinations. These containers are marked with an optical code on the side, which indicates the type of dosimeter that they must contain.

An automaton is in charge of reading the code on the side of the container and placing the suitable one under the exit of the channel. To that end, it moves the platform and, with it, the containers.

The containers can be easily removed from the platform. The operator can thus substitute full containers with other empty ones in the reader, with hardly any interruptions in the work of the reader.

The preferred process to be used with the equipment described as preferred embodiment is the following:
The operator of the radiotherapy or radiodiagnosis equipment, executing the first module of the software application, opens the record of the patient and enters the technique to be applied. The application then requests the additional data that may be needed, and requests a dosimeter from it.

The operator passes one of its non-irradiated dosimeters through the autonomous identifier. The application indicates to it the place of the body of the patient in which the dosimeter must be fixed.

If more dosimeters were necessary, the application will request a new dosimeter, and will proceed as in the previous case.

Once the medical procedure has ended, the operator removes the dosimeters from the patient and introduces them in a box, or vessel provided with a small slot. It is thus impossible for the operator to be confused and use one and the same dosimeter more than once.

Both the box with irradiated dosimeters and the non-irradiated dosimeters are periodically collected and new erased dosimeters are delivered to the operator.

The advantage of also collecting the unused dosimeters is that a low and controlled level, the natural or background dose which they can accumulate, is maintained.

The collected dosimeters pass to the installation in which the reader and the second module of the software application are located. The latter resides in a computer which is incorporated to the dosimeter reader itself.

In the reader, the irradiated dosimeters are read and the ones which were not used are erased.

The information of the read dosimeters passes to the third module of the software application, which evaluates all the information and transmits to the relevant people.

## Claims

1. An equipment for the measurement of ionizing radiation doses, being dedicated to measuring the doses of patients in the field of radiodiagnosis, **characterized by** comprising:
- multiple dosimeters, each formed by a frame with a parallelepiped form and with a bevel edge (2) in one of its corners, the frame having a series of boreholes (1) located in an array of columns and rows, and the frame having a borehole (3), in which a radiation sensor element that is a thermo luminescent disk is snap-fit;
- an autonomous dosimeter identifier, which has optical sensors to measure the existence or non-existence of the boreholes (1) and the position of the bevel edge (2);
- an automatic dosimeter reader, which is formed by a loading unit, a transport channel, an identification unit, an irradiation unit, a heating unit, a light measurement unit and a dosimeter collection unit;
- and a software application in a computer, configured to calculate the doses according to the individual doses received by each of the dosimeters, and the position thereof in the body of the patient.

2. The equipment for the measurement of ionizing radiation doses dedicated to measuring the doses of patients in the field of radiodiagnosis according to claim 1, **characterized in that** its dosimeter has a sensor element made of doped lithium flouride.

3. The equipment for the measurement of ionizing radiation doses dedicated to measuring the doses of patients in the field of radiodiagnosis according to claim 1, **characterized in that** its dosimeter has a frame made of polyimide.

4. The equipment for the measurement of ionizing radiation doses dedicated to measuring the doses of patients in the field of radiodiagnosis according to claim 1, **characterized in that** its dosimeter has 3 columns and 14 rows.

5. The equipment for the measurement of ionizing radiation doses dedicated to measuring the doses of patients in the field of radiodiagnosis according to claim 4, **characterized in that** its dosimeter has exactly 8 boreholes in each of the three columns and must be at least one borehole in each row.

6. The equipment for the measurement of ionizing radiation doses dedicated to measuring the doses of patients in the field of radiodiagnosis according to claim 1, **characterized in that** its autonomous dosimeter identifier has 3 optical sensors.

7. The equipment for the measurement of ionizing radiation doses dedicated to measuring the doses of patients in the field of radiodiagnosis according to claim 1, **characterized in that** its irradiation unit consist of a solid stainless steel block (5), inside which a hollow has been made so that a cylinder (6) that has a radioactive source in a cavity (8) rotates and where the block (5) has a small orifice (4) that faces the radioactive source when the cylinder (6) rotates.

8. The equipment for the measurement of ionizing radiation doses dedicated to measuring the doses of patients in the field of radiodiagnosis according to claim 1, **characterized in that** in the heating unit measures the temperature of the nitrogen stream by means of a thermocouple and that information passes to a microcontroller which records, calculates, and compares the real temperature curve and power curve of the heating unit for early detection of anomalies

9. The equipment for the measurement of ionizing radiation doses dedicated to measuring the doses of patients in the field of radiodiagnosis according to claim 1, **characterized in that** its light measurement unit consist of a photomultiplier tube emitting a pulse current for each photon of light emitted by the sensor element of the dosimeter.

10. The equipment for the measurement of ionizing radiation doses dedicated to measuring the doses of patients in the field of radiodiagnosis according to claim 1, **characterized in that** its dosimeter collection unit consist of a platform (13) which capable of sliding on linear guide (14), and several containers (9 to 12) with codes on the side are assembled on the platform (13), and has a collection system for processed dosimeters which classifies them on those containers.

11. Use of an equipment according to any of claims 1-10 for the measurement of ionizing radiation doses, being dedicated to measuring the doses of patients in the field ofradiodiagnosis, **characterized in that** comprises the following steps:
• The first module of the computer application is opened with the patient data and requests additional information and finally requests a dosimeter;
• The operator passes one of its non-irradiated dosimeters through the autonomous identifier;
• The first module of the application indicates the place of the body of the patient in which the dosimeter must be placed;
• Once the dosimeter is placed in the patient body, the irradiation is performed;
• When the irradiation has ended the dosimeter is withdrawn from the patient's body and placed in a box reserved for irradiated dosimeters, in order not to be confused;
• Both boxes, the one with irradiated dosimeters and the one with unused dosimeters, are periodically collected and renewed and are sent to the place where the dosimeter reader is;
• There, using the second module of software, the dosimeter reader reads them; and
• Once all the information obtained from the first and second module is collected, the computer uses a third module which evaluates all the information.

## Patentansprüche

1. Einrichtung zur Messung von ionisierenden Strahlungsdosen zur Messung der Dosen von Patienten im Bereich der Radiodiagnostik, **dadurch gekennzeichnet, dass** sie Folgendes umfasst:
- mehrere Dosimeter, jeweils von einem Rahmen mit parallelflacher Form gebildet, und mit einer abgeschrägten Kante (2) an einer seiner Ecken, wobei der Rahmen eine Reihe von Bohrlöchern (1) hat die in einer Gruppierung von Spalten und Reihen angeordnet sind, und der Rahmen ein Bohrloch (3) hat, in welches ein Strahlungssensorelement, welches eine Thermolumineszenz-Platte ist, einrastet;
- eine selbstständige Dosimeter-Kennung, welche optische Sensoren hat, um das Vorliegen oder Nicht-Vorliegen der Bohrlöcher (1) und die Position der abgeschrägten Kante (2) zu messen;
- einen automatischen Dosimeter-Leser, der von einer Ladeeinheit, einem Transportkanal, einer Erkennungseinheit, einer Bestrahlungseinheit, einer Heizeinheit, einer Lichtmesseinheit und einer Dosimeter-Sammeleinheit, gebildet wird;
- und eine Software-Applikation in einem Rechner, ausgebildet, um die Dosen gemäß der einzelnen Dosen, die von jedem der Dosimeter empfangen werden, und die Position davon im Körper des Patienten zu berechnen.

2. Einrichtung zur Messung von ionisierenden Strahlungsdosen zur Messung der Dosen von Patienten im Bereich der Radiodiagnostik gemäß Anspruch 1, **dadurch gekennzeichnet, dass** dessen Dosimeter ein aus dotiertem Lithiumfluorid bestehenden Sensorelement hat.

3. Einrichtung zur Messung von ionisierenden Strahlungsdosen zur Messung der Dosen von Patienten im Bereich der Radiodiagnostik gemäß Anspruch 1, **dadurch gekennzeichnet, dass** dessen Dosimeter einen aus Polyimid bestehenden Rahmen hat.

4. Einrichtung zur Messung von ionisierenden Strahlungsdosen zur Messung der Dosen von Patienten im Bereich der Radiodiagnostik gemäß Anspruch 1, **dadurch gekennzeichnet, dass** dessen Dosimeter 3 Spalten und 14 Reihen hat.

5. Einrichtung zur Messung von ionisierenden Strahlungsdosen zur Messung der Dosen von Patienten im Bereich der Radiodiagnostik gemäß Anspruch 4, **dadurch gekennzeichnet, dass** dessen Dosimeter exakt 8 Bohrlöcher in jeder der drei Spalten hat, und es zumindest ein Bohrloch in jeder Reihe geben muss.

6. Einrichtung zur Messung von ionisierenden Strahlungsdosen zur Messung der Dosen von Patienten im Bereich der Radiodiagnostik gemäß Anspruch 1, **dadurch gekennzeichnet, dass** dessen selbstständige Dosimeter-Kennung 3 optische Sensoren hat.

7. Einrichtung zur Messung von ionisierenden Strahlungsdosen zur Messung der Dosen von Patienten im Bereich der Radiodiagnostik gemäß Anspruch 1, **dadurch gekennzeichnet, dass** dessen Bestrahlungseinheit aus einem massiven Edelstahl-Block (5) besteht, in dessen Innerem eine Vertiefung eingebracht wurde, so dass eine Walze (6), welche eine radioaktive Quelle in einem Hohlraum (8) hat, rotiert, und wo der Block (5) eine kleine Öffnung (4) hat, welche zur radioaktiven Quelle zeigt, wenn die Walze (6) rotiert.

8. Einrichtung zur Messung von ionisierenden Strahlungsdosen zur Messung der Dosen von Patienten im Bereich der Radiodiagnostik gemäß Anspruch 1, **dadurch gekennzeichnet, dass** in der Heizeinheit die Temperatur des Stickstoffstromes über einen Thermofühler gemessen wird, und diese Information zu einem Mikrokontroller übergeht, welcher zur Früherkennung von Störungen die Ist-Temperaturkurve und Leistungskurve der Heizeinheit aufzeichnet, berechnet und vergleicht.

9. Einrichtung zur Messung von ionisierenden Strahlungsdosen zur Messung der Dosen von Patienten im Bereich der Radiodiagnostik gemäß Anspruch 1, **dadurch gekennzeichnet, dass** dessen Lichtmesseinheit aus einem Photovervielfacher besteht, der einen Pulsstrom für jedes Lichtphoton, welches vom Sensorelement des Dosimeters emittiert wird, emittiert.

10. Einrichtung zur Messung von ionisierenden Strahlungsdosen zur Messung der Dosen von Patienten im Bereich der Radiodiagnostik gemäß Anspruch 1, **dadurch gekennzeichnet, dass** dessen Dosimeter-Sammeleinheit aus einer Plattform (13) besteht, welche auf einer Linearführung (14) entlanggleiten kann, und verschiedene Behälter (9 bis 12) mit Codes an der Seite auf der Plattform (13) montiert sind, und ein Sammelsystem für verarbeitete Dosimeter hat, welches sie in diese Behälter einordnet.

11. Verwendung einer Einrichtung gemäß einer der Ansprüche 1-10 für die Messung von ionisierenden Strahlungsdosen zur Messung der Dosen von Patienten im Bereich der Radiodiagnostik, **dadurch gekennzeichnet, dass** sie folgende Schritte umfasst:
• Das erste Modul der Rechner-Applikation wird mit den Patienten-Daten geöffnet und fragt zusätzliche Information an, und fragt schließlich ein Dosimeter an;
• Der Bediener gibt eines seiner nicht-bestrahlten Dosimeter durch die selbstständige Kennung;
• Das erste Modul der Applikation gibt die Stelle des Körpers des Patienten an, an welcher das Dosimeter platziert werden muss;
• Nachdem das Dosimeter im Körper des Patienten platziert worden ist, wird die Bestrahlung vorgenommen;
• Wenn die Bestrahlung beendet worden ist, wird das Dosimeter aus dem Körper des Patienten herausgezogen und in ein für bestrahlte Dosimeter reserviertes Behältnis abgelagert, um nicht verwechselt zu werden;
• Beide Behältnisse, dasjenige mit bestrahlten Dosimetern und dasjenige mit unbenutzten Dosimetern, werden in regelmäßigen Abständen eingesammelt und erneuert und zur Stelle, wo sich der Dosimeter-Leser befindet, geschickt;
• Dort, unter Verwendung des zweiten Softwaremoduls, liest sie der Dosimeter-Leser; und
• Nachdem sämtliche vom ersten und zweiten Modul erhaltenen Informationen gesammelt worden sind, benutzt der Rechner ein drittes Modul, welches sämtliche Informationen auswertet.

## Revendications

1. Équipement de mesure de doses de rayonnements ionisants, étant destiné à mesurer les doses des patients dans le domaine du radiodiagnostique, **caractérisé en ce qu'**il comprend :
- de multiples dosimètres, chacun formé par un support avec une forme parallélépipède et avec un bord biseauté (2) sur l'un de ses coins, le support ayant une série de perforations (1) situées dans une rangée de colonnes et de lignes, et le support ayant une perforation (3), dans laquelle un élément senseur de rayonnement étant un disque thermoluminescent est encliquetable ;
- un identifiant de dosimètre autonome, qui a des senseurs optiques pour mesurer l'existence ou non-existence des perforations (1) et la position du bord biseauté (2) ;
- un lecteur de dosimètre automatique, qui est formé par une unité de charge, un canal de transport, une unité d'identification, une unité d'irradiation, une unité de chauffage, une unité de mesure de la lumière et une unité de collecte de dosimètre ;
- et une application de logiciel dans un ordinateur, configurée pour calculer les doses selon les doses individuelles reçues par chacun des dosimètres, et la position de ceux-ci dans le corps du patient.

2. L'équipement de mesure de doses de rayonnements ionisants destiné à mesurer les doses des patients dans le domaine du radiodiagnostique selon la revendication 1, **caractérisé en ce que** son dosimètre a un élément senseur fait de fluorure de lithium dopé.

3. L'équipement de mesure de doses de rayonnements ionisants destiné à mesurer les doses des patients dans le domaine du radiodiagnostique selon la revendication 1, **caractérisé en ce que** son dosimètre a un support fait de polyamide.

4. L'équipement de mesure des doses de rayonnements ionisants destiné à mesurer les doses des patients dans le domaine du radiodiagnostique selon la revendication 1, **caractérisé en ce que** son dosimètre a 3 colonnes et 14 lignes.

5. L'équipement de mesure de doses de rayonnements ionisants destiné à mesurer les doses des patients dans le domaine du radiodiagnostique selon la revendication 4, **caractérisé en ce que** son dosimètre a exactement 8 perforations dans chacune des trois colonnes et qu'il faut qu'il y ait au moins une perforation dans chaque ligne.

6. L'équipement de mesure de doses de rayonnements ionisants destiné à mesurer les doses des patients dans le domaine du radiodiagnostique selon la revendication 1, **caractérisé en ce que** son identifiant de dosimètre autonome a 3 senseurs optiques.

7. L'équipement de mesure de doses de rayonnements ionisants destiné à mesurer les doses des patients dans le domaine du radiodiagnostique selon la revendication 1, **caractérisé en ce que** son unité d'irradiation consiste en un bloc solide en acier inoxydable (5), à l'intérieur duquel un creux a été fait afin qu'un cylindre (6) qui a une source radioactive dans une cavité (8) tourne et où le bloc (5) a un petit orifice (4) qui fait face à la source radioactive lorsque le cylindre (6) tourne.

8. L'équipement de mesure de doses de rayonnements ionisants destiné à mesurer les doses des patients dans le domaine du radiodiagnostique selon la revendication 1, **caractérisé en ce que** l'unité de chauffage mesure la température du flux d'azote au moyen d'un thermocouple et que l'information passe par un microcontrôleur qui enregistre, calcule, et compare la courbe de température réelle et la courbe de puissance de l'unité de chauffage pour une détection précoce des anomalies.

9. L'équipement de mesure de doses de rayonnements ionisants destiné à mesurer les doses des patients dans le domaine du radiodiagnostique selon la revendication 1, **caractérisé en ce que** son unité de mesure de la lumière consiste en un tube photomultiplicateur émettant un courant d'impulsion pour chaque photon de lumière émis par l'élément senseur du dosimètre.

10. L'équipement de mesure de doses de rayonnements ionisants destiné à mesurer les doses des patients dans le domaine du radiodiagnostique selon la revendication 1, **caractérisé en ce que** son unité de collecte de dosimètre consiste en une plateforme (13) qui est capable de glisser sur un guide linéaire (14), et en plusieurs containers (9 à 12) avec des codes sur le côté qui sont assemblés sur la plateforme (13), et a un système de collecte pour des dosimètres traités qui les classifie sur ces containers.

11. Utilisation d'un équipement selon l'une des revendications 1-10 pour mesurer les doses de rayonnements ionisants, étant destiné à mesurer les doses des patients dans le domaine du radiodiagnostique, **caractérisée en ce qu'**elle comprend les étapes suivantes :
• le premier module de l'application de l'ordinateur est ouvert avec les données du patient et demande de l'information supplémentaire et enfin demande un dosimètre ;
• l'opérateur passe l'un de ses dosimètres non-irradiés à travers l'identifiant autonome ;
• le premier module de l'application indique la place du corps du patient dans le lequel le dosimètre doit être placé ;
• une fois le dosimètre placé dans le corps du patient, l'irradiation est réalisée ;
• lorsque l'irradiation est terminée le dosimètre est retiré du corps du patient et placé dans une boîte réservée aux dosimètres irradiés, pour ne pas les confondre ;
• les deux boîtes, l'une avec des dosimètres irradiés et l'autre avec des dosimètres inutilisés, sont régulièrement collectées et renouvelées et sont envoyées à l'endroit où le lecteur de dosimètre se trouve ;
• à cet endroit, en utilisant le deuxième module du logiciel, le lecteur de dosimètre les lit ; et
• une fois que toute l'information obtenue du premier et du deuxième module est collectée, l'ordinateur utilise un troisième module qui évalue toute l'information.
